# EUROPÄISCHE PATENTSCHRIFT

(11) **EP 3 691 957 B1**
(45) Veröffentlichungstag und Bekanntmachung des Hinweises auf die Patenterteilung: **11.05.2022**
(21) Anmeldenummer: 18786693.4
(22) Anmeldetag: 02.10.2018
(51) Int. Cl.: F16C 23/08, F16C 25/08, F16C 35/077, F16H 55/24, B62D 5/04, F16C 27/06

(54) **ELEKTROMECHANISCHE SERVOLENKUNG MIT SCHRAUBRADGETRIEBE UND EINER KOMPENSATIONSEINRICHTUNG ZUR ABSTÜTZUNG EINES LOSLAGERS AM GETRIEBEGEHÄUSE**
ELECTROMECHANICAL POWER STEERING SYSTEM HAVING A HELICAL GEAR MECHANISM AND HAVING A COMPENSATION DEVICE FOR SUPPORTING A FLOATING BEARING ON THE GEAR HOUSING
DIRECTION ASSISTÉE ÉLECTROMÉCANIQUE MUNIE D'UN ENGRENAGE À ROUE HÉLICOÏDALE ET D'UN DISPOSITIF DE COMPENSATION SERVANT D'APPUI À UN PALIER LIBRE AU NIVEAU DU CARTER D'ENGRENAGE

(30) Priorität: 05.10.2017 DE 102017123150
(43) Veröffentlichungstag der Anmeldung: 12.08.2020
(73) Patentinhaber: thyssenkrupp Presta AG, 9492 Eschen (LI); thyssenkrupp AG, 45143 Essen (DE)
(72) Erfinder: RATH, Krisztian, 1039 Budapest (HU)
(74) Vertreter: thyssenkrupp Intellectual Property GmbH
(86) Internationale Anmeldenummer: PCT/EP2018/076720
(87) Internationale Veröffentlichungsnummer: WO 2019/068674

(56) Entgegenhaltungen:
- EP-A1- 1 637 769
- DE-A1-102008 041 112
- DE-A1-102014 105 921
- US-A1- 2001 040 067
- US-A1- 2015 266 506

## Beschreibung

Die vorliegende Erfindung betrifft eine elektromechanische Servolenkung mit den Merkmalen des Oberbegriffs des Anspruchs 1.

In elektromechanischen Servolenkungen wird über einen Elektromotor ein Drehmoment erzeugt, das auf ein Getriebe übertragen und als Hilfskraftunterstützung dem Fahrer beim Lenken zur Verfügung steht.

Eine gattungsgemäße elektromechanische Servolenkung weist einen elektrischen Servomotor auf, der eine Schneckenwelle antreibt, die mit einem auf einer Lenkwelle oder direkt auf einem Lenkritzel, welches mit einer Zahnstange in Eingriff steht, angeordneten Schneckenrad kämmt. Die Schneckenwelle ist mit einer Motorwelle des Elektromotors gekoppelt. Das Schneckenrad ist mit der Lenkwelle oder dem Lenkritzel drehfest verbunden. Die Schneckenwelle eines herkömmliches Schneckengetriebes hat am antriebsseitigen Ende ein Festlager und an ihrem freien Ende ein Loslager.

Aus der Offenlegungsschrift DE 10 161 715 A1 ist ein Schneckengetriebe bekannt, bei dem die Schnecke senkrecht zur Drehachse schwenkbar und über ein Lager gestützt ist. Die Schneckenwelle wird radial mit einer Vorspannkraft beaufschlagt und gegen die Schneckenradverzahnung gedrückt. Die Vorspannkraft wird dabei über eine Feder und eine Druckeinrichtung bereitgestellt. Als nachteilig erweist sich diese Lösung, da das Auftreten von Geräuschen nicht vermieden werden kann.

Die Schrift DE 10 2014 105 921 A1 offenbart ein Schwenklager, das in einer Hülse aufgenommen ist, welche zwei einander radial gegenüberliegende und radial nach innen oder außen gerichtete Lagernasen zur Ausbildung des Schwenkelements aufweist. Ein Lageraußenring des Lagers liegt nur lose an den Lagernasen an und kann sich frei bewegen. Dadurch kommt es zu einer ungewollten Geräuschentwicklung und Reibungsentwicklung. Des Weiteren ist aus der EP1637769 A1 eine gattungsgemäße elektromechanische Servolenkung bekannt.

Es ist deshalb Aufgabe der vorliegenden Erfindung eine elektromechanische Servolenkung mit einem Schneckengetriebe anzugeben, bei dem Geräusche und Reibung reduziert werden können.

Diese Aufgabe wird von einer elektromechanischen Servolenkung mit den Merkmalen des Anspruchs 1, dem nebengeordneten Anspruch 10, sowie den Unteransprüchen gelöst.

Demnach ist eine elektromechanische Servolenkung umfassend einen elektrischen Servomotor oder einen Elektromotor mit einer Motorwelle, der eine mit einem Schraubrad kämmende Welle antreibt, vorgesehen, wobei die Welle in einem Getriebegehäuse angeordnet und an ihrem ersten Ende in einer Lageranordnung um eine Drehachse drehbar gelagert und an ihrem zweiten Ende in einem Loslager gelagert ist, wobei das Loslager von einer Kompensationseinrichtung umgeben ist, die einen Innenring aufweist, der auf zwei radial gegenüberliegenden Seiten jeweils eine Nase aufweist, die aus einem Elastomer gebildet ist, und dass die Kompensationseinrichtung einen den Innenring umfangseitig umgebenden Außenring aufweist, wobei der Außenring entsprechend geformte Ohren zur Aufnahme der Nasen aufweist, und zwischen dem Innenring und dem Außenring in einem unbelasteten Zustand ein Spalt außerhalb des Bereichs der Nasen vorliegt. Die Kompensationseinrichtung kann somit Verschleiß, Fertigungstoleranzen und Wärmeausdehnung kompensieren. Sie ist einfach aufgebaut und benötigt wenig Bauraum.

Bevorzugt sind die Nasen einteilig mit dem Innenring ausgebildet.

Es ist vorteilhaft, wenn die Nasen in Radialrichtung geschlitzt sind. Dadurch ergeben sich bessere Dämpfungseigenschaften.

In einer bevorzugten Ausführungsform ist das erste Ende ein motornahes Ende der Welle, welches in einer Lageranordnung gelagert ist und das zweite Ende ist ein motorfernes Ende der Welle, welches im Loslager gelagert ist. Es ist denkbar und möglich, dass es sich bei dem ersten Ende um ein motorfernes Ende und bei dem zweiten Ende um ein motornahes Ende der Welle handelt. Vorzugsweise ist der Außenring im Getriebegehäuse eingepresst und die zwei Ohren des Außenrings durch einen Spalt zu einer Innenfläche des Getriebegehäuses beabstandet oder die zwei Ohren des Außenrings haben keinen Kontakt mit der Rohfläche des Getriebegehäuses. Dadurch können Fertigungskosten reduziert werden, da das Getriebegehäuse nur im Bereich des Lagersitzes bearbeitet werden muss.

Bevorzugt dienen die Nasen als Dämpfungselemente und dämpfen die Bewegung des Innenrings in dem Außenring.

In einer vorteilhaften Ausführungsform ist die Längsachse der Nasen senkrecht zur Drehachse der Welle und senkrecht zu einer Bewegungsrichtung der Kompensationseinrichtung orientiert, wobei entlang der Bewegungsrichtung keine oder eine geringe Vorspannkraft vorliegt, die die Welle auf das Schraubrad vorspannt. Die Welle kann so in Richtung des Schraubrads vorgespannt werden, während senkrecht zur Wellenachse die Steifigkeit gewährleistet wird.

Vorzugsweise definieren die Nasen eine Schwenkachse, um die die Welle in Richtung des Schraubrades schwenkbar ist oder geschwenkt werden kann.

Es wird bevorzugt, dass das Loslager in den Innenring eingepresst ist. Vorzugsweise sind der Innenring und der Außenring der Kompensationseinrichtung aus Kunststoff hergestellt.

In einem anderen Ausführungsbeispiel kann vorgesehen sein, dass der Innenring der Kompensationseinrichtung durch den Außenring des Loslagers gebildet ist, der auf zwei radial gegenüberliegenden Seiten jeweils eine Nase aufweist, die aus einem Elastomer gebildet ist, und der Außenring des Loslagers von einer Hülse umfangsseitig umgeben ist, wobei die Hülse entsprechend geformte Ohren zur Aufnahme der Nasen aufweist, und zwischen dem Außenring des Loslagers und der Hülse in einem unbelasteten Zustand ein Spalt außerhalb des Bereichs der Nasen vorliegt. In anderen Worten, die Nasen sind auf dem Außenring des Loslagers angeordnet und eine Hülse analog zum Außenring der Kompensationseinrichtung umgibt den Außenring des Loslagers. Die Kompensationseinrichtung besteht somit aus nur einem Teil, wodurch Bewegung und entsprechende Reibung zwischen Kontaktflächen reduziert oder verhindert werden kann.

Es kann vorgesehen sein, dass der Elektromotor oder der elektrische Servomotor der elektromechanischen Servolenkung an einer Lenksäule angeordnet ist oder auf ein mit der Lenkwelle verbundenes Lenkritzel wirkt. Bei elektromechanischen Servolenkungen mit Doppelritzel-Lenkgetriebe kann der elektrische Servomotor auf ein mit der Lenkwelle verbundenes Lenkritzel und/oder ein zu dem Lenkritzel beabstandetes und mit der Zahnstange kämmendes zweites Ritzel wirken.

In allen Ausführungen ist es bevorzugt, dass das Schraubrad ein Schneckenrad und die Welle eine Schneckenwelle ist.

Nachfolgend werden Ausführungsbeispiele der vorliegenden Erfindung anhand der Zeichnungen beschrieben. Gleiche Bauteile oder Bauteile mit gleichen Funktionen tragen dabei gleiche Bezugszeichen. Es zeigen:
- Figur 1:: eine schematische Darstellung einer elektromechanischen Servolenkung mit Doppelritzel-Lenkgetriebe,
- Figur 2:: eine räumliche Darstellung des Getriebes der Servolenkung aus Figur 1,
- Figur 3:: eine räumliche Darstellung des Getriebes der Figur 2 reduziert auf eine Schneckenwelle, eine erfindungsgemäße Kompensationseinrichtung und ein Schneckenrad,
- Figur 4:: eine Explosionszeichnung der erfindungsgemäßen Kompensationseinrichtung aus Figur 3,
- Figur 5:: eine Explosionszeichnung einer erfindungsgemäßen Kompensationseinrichtung mit geschlitzten Nasen,
- Figur 6:: eine weitere Explosionszeichnung der erfindungsgemäßen Kompensationseinrichtung aus Figur 4 mit einem auf dem Loslager aufgepressten Innenring,
- Figur 7:: eine Seitenansicht der Kompensationseinrichtung aus Figur 5,
- Figur 8:: eine Explosionszeichnung mit einer weiteren Ausführungsform der erfindungsgemäßen Kompensationseinrichtung mit Sitz am Loslageraußenring, sowie
- Figur 9:: eine elektromechanische Servolenkung mit einem auf eine Lenkwelle wirkenden Elektromotor einer Hilfskraftunterstützung.

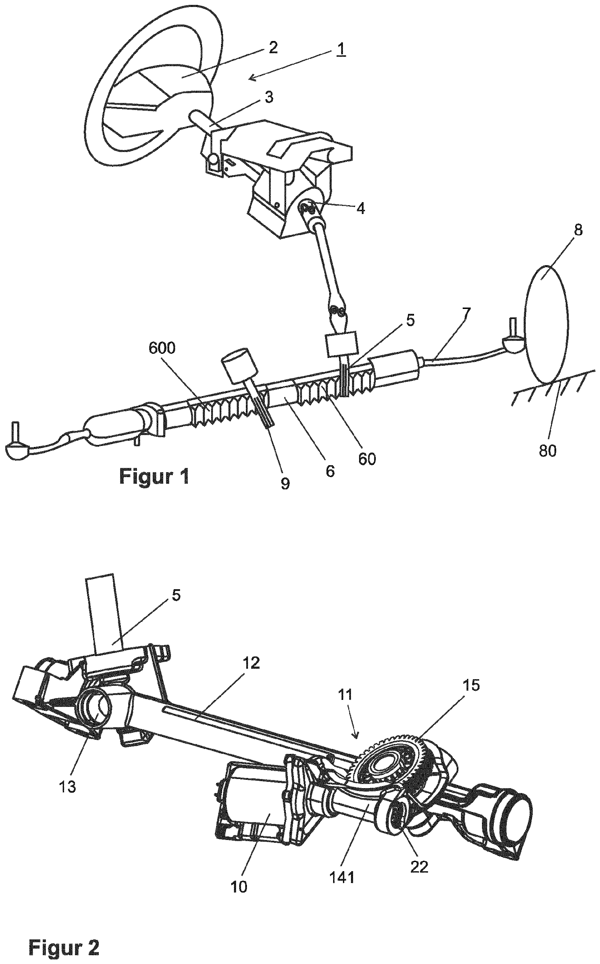

In der Figur 1 ist eine elektromechanische Kraftfahrzeuglenkung 1 mit einem Lenkrad 2, das mit einer oberen Lenkwelle 3 und einer unteren Lenkwelle 4 drehfest gekoppelt ist, schematisch dargestellt. Die obere Lenkwelle 3 steht über einen nicht dargestellten Torsionsstab in funktioneller Verbindung mit der unteren Lenkwelle 4. Die untere Lenkwelle 4 ist mit einem Lenkritzel 5 drehfest verbunden. Das Lenkritzel 5 kämmt in bekannter Weise mit einem ersten Verzahnungsbereich 60 einer Zahnstange 6. Die Zahnstange 6 ist in einem Lenkungsgehäuse in Richtung ihrer Längsachse verschieblich gelagert.

An ihrem freien Ende ist die Zahnstange 6 mit Spurstangen 7 über nicht dargestellte Kugelgelenke verbunden. Die Spurstangen 7 selbst sind in bekannter Weise über Achsschenkel mit je einem gelenkten Rad 8 des Kraftfahrzeugs verbunden. Eine Drehung des Lenkrades 2 führt über die Verbindung der Lenkwelle 3, 4 und des Lenkritzels 5 zu einer Längsverschiebung der Zahnstange 6 und damit zu einer Verschwenkung der gelenkten Räder 8. Die gelenkten Räder 8 erfahren über eine Fahrbahn 80 eine Rückwirkung, die der Lenkbewegung entgegen wirkt. Zum Verschwenken der Räder 8 ist folglich eine Kraft erforderlich, die ein entsprechendes Drehmoment am Lenkrad 2 erforderlich macht. Beabstandet zu dem ersten Verzahnungsbereich 60, in dem das Lenkritzel 5 mit der Zahnstange 6 kämmt, ist ein zweiter Verzahnungsbereich 600 vorgesehen, in dem ein zweites Ritzel 9 mit der Zahnstange 6 in Eingriff steht.

Ein Elektromotor oder ein elektrischer Servomotor einer Servoeinheit ist vorgesehen, um dem Fahrer bei einer Lenkbewegung zu unterstützen. Die Servoeinheit kann dabei als Überlagerungslenkung an der Lenksäule oder als Hilfskraftunterstützungseinrichtung an dem Lenkritzel 5 und/oder dem zweiten Ritzel 9 angeordnet sein.

In der Figur 2 ist das Lenkgehäuse 12 mit dem Elektromotor 10 und einem Getriebe 11 dargestellt. Im Inneren des lang gestreckten und im Wesentlichen hohlen zylindrischen Lenkgehäuses 12 ist die Zahnstange 6 in Längsrichtung verschieblich gelagert. Das Lenkgehäuse 12 weist auf der vom Lenkritzel 5 abgewandten Seite eine Aufnahmebohrung 13 auf, in die ein Druckstück integriert werden kann, um die Zahnstange 6 gegen das Lenkritzel 5 vorzuspannen. Beabstandet zu dem Lenkritzel ist der Elektromotor 10 vorgesehen. Der Elektromotor 10 treibt die Schneckenwelle 14 an, die mit ihrer Schnecke in Eingriff mit einem Schneckenrad 15 steht, dass mit dem zweiten Ritzel 9 drehfest verbunden ist. Bei einem Betrieb des Elektromotors 10 wird die Schneckenwelle 14 angetrieben und die Schneckenwelle 14 und das Schneckenrad 15 drehen sich entsprechend um ein Unterstützungsmoment unmittelbar in das zweite Ritzel 9 einzuleiten.

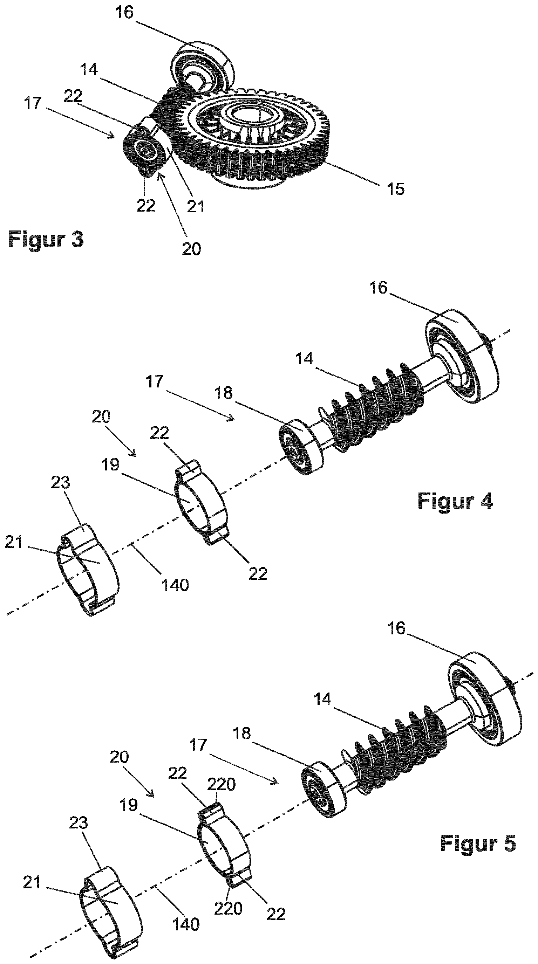

Die Figur 3 zeigt die Schneckenwelle 14 mit einer motornahen Lageranordnung 16 und einer motorfernen Lageranordnung 17, sowie das mit der Schneckenwelle 14 kämmende Schneckenrad 15 in einer perspektivischen Darstellung, wobei auf die Komponenten des Getriebegehäuses verzichtet wurde.

Die Figuren 4 bis 7 zeigen die Einzelheiten der Lageranordnung, insbesondere der motorfernen Lageranordnung 17.

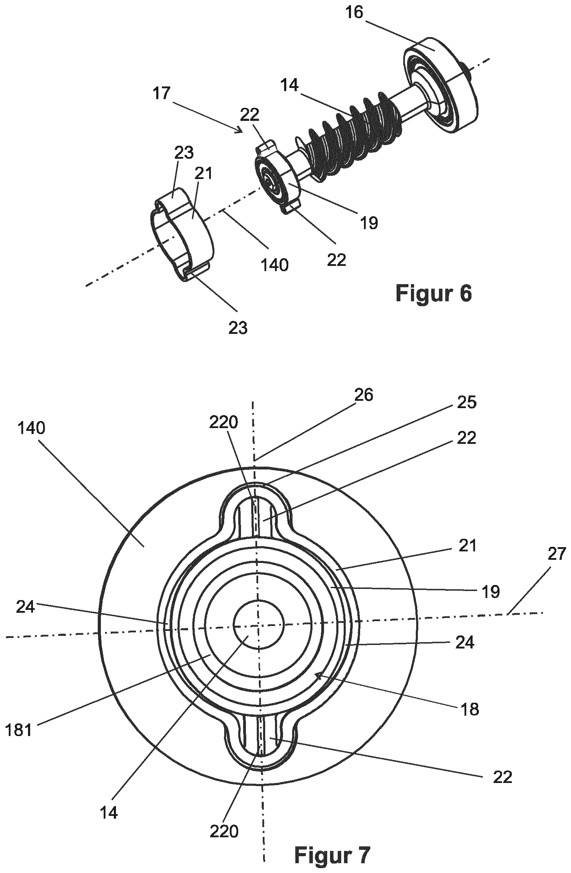

Die motornahe Lageranordnung 16 weist ein Festlager auf. Die motorferne Lageranordnung 17 umfasst ein Wälzlager 18, welches als Loslager ausgebildet ist und geringfügige Axialbewegungen und Änderungen der Drehachse der Schneckenwelle 14 gegenüber dem Getriebegehäuse 141 zulässt. Das motorferne Wälzlager 18 ist in einem hülsenförmigen Innenring 19 einer Kompensationseinrichtung 20 eingepresst. Die Kompensationseinrichtung 20 weist weiterhin einen hülsenförmigen Außenring 21 auf, der den Innenring 19 umfangseitig umgibt. Der Innenring 19 der Kompensationseinrichtung 20 weist auf zwei radial gegenüberliegenden Seiten Vorsprünge auf, welche als Nasen 22 bezeichnet werden, die aus einem Elastomer gebildet sind. Der Innenring 19 ist bis auf die Nasen 22 kreisrund ausgebildet. Die Elastomer-Nasen 22 sind einteilig mit dem Innenring 19 ausgebildet und können geschlitzt 220 sein, wie in Figur 5 dargestellt, um dadurch bessere Steifigkeits- und Dämpfungseigenschaften zu ermöglichen. Zur Aufnahme der Nasen 22 weist der Außenring 21 entsprechend geformte Vertiefungen oder Aussparungen auf, welche als Ohren 23 bezeichnet werden. In dem gezeigten Ausführungsbeispiel sind die Nasen 22 des Innenrings 19 und entsprechend die Ohren 23 des Außenrings 21 im Kontaktbereich abgerundet oder bogenförmig. In dem Kontaktbereich können beide abgeflacht oder konisch ausgebildet sein. Es ist auch denkbar und möglich, dass die Nasen 22 in einem Winkel von bis zu 45° bezogen auf eine Längsachse 26 angeordnet sind. Die Ohren 23 des Außenrings 22 sind dem Winkel entsprechend ausgebildet. Die Nasen können den gesamten Bereich der Ohren ausfüllen oder aber, wie in Figur 7 dargestellt, mit einem Spalt zu einer oder mehreren Wänden der geformten Ohren positioniert sein. Der Außenring ist bis auf die Bereiche, in welchen die Ohren vorgesehen sind, kreisrund ausgebildet. Zwischen dem Innenring 19 und dem Außenring 21 liegt ein Spalt/Spiel 24 außerhalb des Bereichs der Nasen 22 beziehungsweise der Ohren vor, dieser ermöglicht, dass die Schneckenwelle 14 in Richtung des Schneckenrads 15 vorgespannt werden kann, während senkrecht zur Schneckenachse 140 die Steifigkeit gewährleistet wird. In anderen Worten, der Innenring 19 kann sich im Außenring 21 senkrecht zur Längsachse 26 der Elastomer-Nasen 22 entsprechend bewegen. In der Richtung der Längsachse der Elastomer-Nasen 22 ist die Steifigkeit sehr hoch und lässt keine oder nur minimale Bewegungen vom Innenring 19 zu. Die Elastomer-Nasen 22 dienen als Dämpfelement. Die maximal mögliche radiale Bewegung des Innenringes 19 ist durch den Anschlag auf dem Außenring 21 begrenzt.

Der Außenring 21 ist im Gehäuseabschnitt 141 des Gussgehäuses 12, wie in Figur 7 dargestellt, eingepresst. Der zylindrische Durchmesser vom Gussgehäuse ist mechanisch bearbeitet und zwar derart, dass die zwei Ohren 23 des Außenrings 21 keinen Kontakt mit der Rohfläche oder der Innenfläche des Gussgehäuses haben und durch einen Spalt 25 zur Innenfläche beabstandet sind. Die Innenfläche des Gussgehäuses ist entsprechend der Form der Ohren des Außenrings bogenförmig ausgebildet.

Die Kompensationseinrichtung 20 ist in dem Gehäuse derart eingesetzt, dass die Längsachse 26 der Elastomer-Nasen 22 oder der Ohren 23 des Außenrings 21 senkrecht zur Drehachse der Schneckenwelle 14 und wobei die Längsachse 26 der Elastomer-Nasen derart auf der Schneckenwelle 14 ausgerichtet sind, dass die Elastomer-Nasen 22 senkrecht zu einer neutralen Ebene stehen, welche der Bewegungsrichtung 27 der Kompensationseinrichtung 20 entspricht. Entlang der Bewegungsrichtung 27 sind projizierte Separationskräfte identisch, was sich darin äußert, dass keine oder nur eine geringe Vorspannkraft der Verzahnung der Schneckenwelle gegenüber der Verzahnung des Schneckenrads vorliegt und damit Zahnseparationskräfte für beide Drehrichtungen identisch sind. Die radiale Separationskraft zwischen Schneckenrad und Schneckenwelle ist drehrichtungsabhängig. Die Schneckenwelle 14 wird radial mit einer Vorspannkraft beaufschlagt und gegen die Schneckenradverzahnung gedrückt. Die Lage der Schneckenwelle 14 ist daher in Bezug auf das Schneckenrad 15 mittels der Kompensationseinrichtung 20 einstellbar. Die Einstellung erfolgt somit auf der motorfernen Seite der Schneckenwelle 14. Die Elastomer-Nasen 22 definieren eine Schwenkachse, so dass die Schneckenwelle 14 sich in Richtung des Schneckenrades bewegen kann.

Vorzugsweise sind der Innenring 19 und der Außenring 21 der Kompensationseinrichtung 20 aus Kunststoff hergestellt.

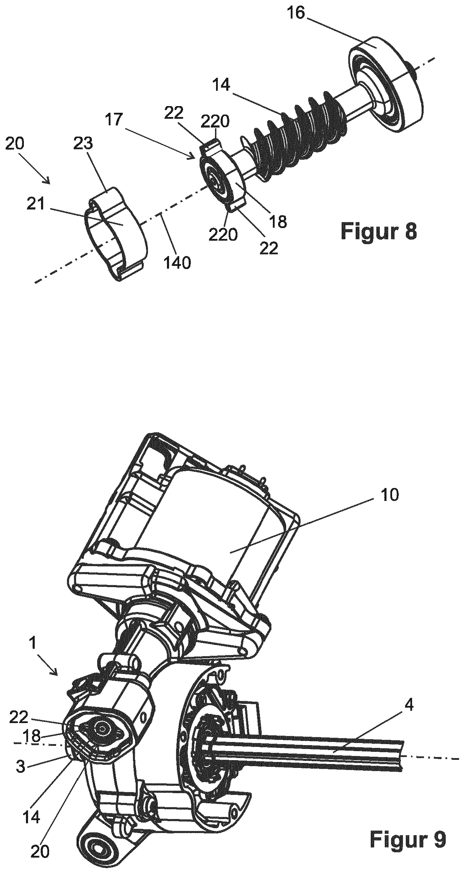

In Figur 8 ist es vorgesehen, die Nasen 22 unmittelbar am Loslageraußenring zu positionieren, wobei diese in den Ohren 23 einer Hülse 21 aufgenommen sind, die bevorzugt aus Kunststoff gefertigt ist, um dadurch Bauteile einsparen zu können.

Die Kompensationseinrichtung ist nicht auf die Verwendung in einem Doppelritzel-Lenkgetriebe begrenzt. Die Kompensationseinrichtung kann auch in einem Einzelritzel-Lenkgetriebe (Single-Pinion) oder, wie in Figur 9 dargestellt, in einer Lenkunterstützung, deren Elektromotor an der oberen Lenksäule angeordnet ist, eingesetzt werden.

Figur 9 zeigt eine elektromechanische Hilfskraftlenkung 1 eines Kraftfahrzeuges mit einem Elektromotor 10, der an einer Lenksäule die Lenkbewegung eines Fahrers unterstützt. Zur Unterstützung ist die Motorwelle des Elektromotors über ein Schneckenradgetriebe, in die Drehung der Lenkwelle eingekoppelt. Die obere Lenkwelle 3 ist mit einem nicht dargestellten Lenkrad unmittelbar drehfest verbunden. Der Elektromotor 10 treibt über das Schneckenradgetriebe die untere Lenkwelle 4 an, die mit einem nicht dargestellten Zahnstangen-Lenkgetriebe verbunden ist. Die Schneckenwelle 14 des Schneckenradgetriebes ist, wie zuvor beschrieben, an ihrem motorfernen Ende in einem Loslager 18 mit einer Kompensationseinrichtung 20 in dem Getriebegehäuse gelagert.

## Patentansprüche

1. Elektromechanische Servolenkung (1) umfassend einen Elektromotor (10) mit einer Motorwelle, der eine mit einem Schraubrad (15) kämmende Welle (14) antreibt, wobei die Welle (14) in einem Getriebegehäuse (141) angeordnet und an ihrem ersten Ende in einer Lageranordnung (16) um eine Drehachse (140) drehbar gelagert ist und an ihrem zweiten Ende in einem Loslager (18) in dem Getriebegehäuse (141) gelagert ist, **dadurch gekennzeichnet, dass** das Loslager (18) von einer Kompensationseinrichtung (20) umgeben ist, die einen Innenring (19) aufweist, der auf zwei radial gegenüberliegenden Seiten jeweils eine Nase (22) aufweist, die aus einem Elastomer gebildet ist, und dass die Kompensationseinrichtung (20) einen den Innenring (19) umfangseitig umgebenden Außenring (21) aufweist, wobei der Außenring (21) entsprechend geformte Ohren (23) zur Aufnahme der Nasen (22) aufweist, und zwischen dem Innenring (19) und dem Außenring (21) in einem unbelasteten Zustand ein Spalt (24) außerhalb des Bereichs der Nasen (22) vorliegt.

2. Elektromechanische Servolenkung nach Anspruch 1, **dadurch gekennzeichnet, dass** die Nasen (22) einteilig mit dem Innenring (19) ausgebildet sind.

3. Elektromechanische Servolenkung nach Anspruch 1 oder 2, **dadurch gekennzeichnet, dass** die Nasen (22) in Radialrichtung geschlitzt sind.

4. Elektromechanische Servolenkung nach einem der vorhergehenden Ansprüche, **dadurch gekennzeichnet, dass** der Außenring (21) im Getriebegehäuse (140) eingepresst ist und die zwei Ohren (23) des Außenrings (21) durch einen Spalt (25) zu einer Innenfläche des Getriebegehäuses beabstandet sind.

5. Elektromechanische Servolenkung nach einem der vorhergehenden Ansprüche, **dadurch gekennzeichnet, dass** die Nasen (22) als Dämpfungselement dienen und die Bewegung des Innenrings (19) in dem Außenring (21) dämpfen.

6. Elektromechanische Servolenkung nach einem der vorhergehenden Ansprüche, **dadurch gekennzeichnet, dass** die Längsachse (26) der Nasen (22) senkrecht zur Drehachse der Welle (140) und senkrecht zu einer Bewegungsrichtung (27) der Kompensationseinrichtung orientiert ist.

7. Elektromechanische Servolenkung nach einem der vorhergehenden Ansprüche, **dadurch gekennzeichnet, dass** die Nasen (22) eine Schwenkachse definieren, um die die Welle (14) in Richtung des Schraubrades (15) schwenkbar ist.

8. Elektromechanische Servolenkung nach einem der vorhergehenden Ansprüche, **dadurch gekennzeichnet, dass** das Loslager (18) in den Innenring (19) eingepresst ist.

9. Elektromechanische Servolenkung nach einem der vorhergehenden Ansprüche, **dadurch gekennzeichnet, dass** der Innenring (19) und der Außenring (21) der Kompensationseinrichtung aus Kunststoff hergestellt sind.

10. Elektromechanische Servolenkung (1) umfassend einen Elektromotor (10) mit einer Motorwelle, der eine mit einem Schraubrad (15) kämmende Welle (14) antreibt, wobei die Welle (14) in einem Getriebegehäuse (141) angeordnet und an ihrem ersten Ende in einer Lageranordnung (16) um eine Drehachse (140) drehbar gelagert ist und an ihrem zweiten Ende in einem Loslager (18) in dem Getriebegehäuse (141) gelagert ist, **dadurch gekennzeichnet, dass** das Loslager (18) einen Außenring aufweist, der auf zwei radial gegenüberliegenden Seiten jeweils eine Nase (22) aufweist, die aus einem Elastomer gebildet ist, und dass der Außenring des Loslagers (18) von einer Hülse (21) umfangseitig umgeben ist, wobei die Hülse (21) entsprechend geformte Ohren (23) zur Aufnahme der Nasen (22) aufweist, und zwischen dem Außenring des Loslagers (18) und der Hülse (21) in einem unbelasteten Zustand ein Spalt außerhalb des Bereichs der Nasen (22) vorliegt.

11. Elektromechanische Servolenkung nach einem der vorhergehenden Ansprüche, **dadurch gekennzeichnet, dass** der Elektromotor (10) der elektromechanischen Servolenkung an einer Lenksäule angeordnet ist.

12. Elektromechanische Servolenkung nach einem der vorhergehenden Ansprüche 1 bis 10, **dadurch gekennzeichnet, dass** der Elektromotor (10) auf ein mit der Lenkwelle verbundenes Lenkritzel wirkt.

13. Elektromechanische Servolenkung nach einem der vorhergehenden Ansprüche 1 bis 10, **dadurch gekennzeichnet, dass** die elektromechanische Servolenkung ein Doppelritzel-Lenkgetriebe aufweist, wobei der Elektromotor (10) auf ein mit der Lenkwelle verbundenes Lenkritzel (5) und/oder ein zu dem Lenkritzel (5) beabstandetes und mit der Zahnstange (6) kämmendes zweites Ritzel (9) wirkt.

14. Elektromechanische Servolenkung nach einem der vorhergehenden Ansprüche, **dadurch gekennzeichnet, dass** das Schraubrad (15) ein Schneckenrad und die Welle (14) eine Schneckenwelle ist.

## Claims

1. An electromechanical power steering system (1) comprising an electric motor (10) with a motor shaft which drives a shaft (14) which meshes with a helical gearwheel (15), wherein the shaft (14) is arranged in a gear housing (141) and, at its first end, is mounted in a bearing arrangement (16) such that it can be rotated about an axis of rotation (140) and, at its second end, is mounted in a floating bearing (18) in the gear housing (141), **characterized in that** the floating bearing (18) is enclosed by a compensation device (20), which has an inner ring (19) which, on two radially opposite sides, has a respective nose (22), which is formed from an elastomer, and **in that** the compensation device (20) has an outer ring (21), which encloses the inner ring (19) circumferentially, wherein the outer ring (21) has appropriately formed lugs (23) for accommodating the noses (22) and, in an unloaded state, there is a gap (24) present between the inner ring (19) and the outer ring (21), outside the region of the noses (22).

2. The electromechanical power steering system as claimed in claim 1, **characterized in that** the noses (22) are formed in one piece with the inner ring (19).

3. The electromechanical power steering system as claimed in claim 1 or 2, **characterized in that** the noses (22) are slit in the radial direction.

4. The electromechanical power steering system as claimed in one of the preceding claims, **characterized in that** the outer ring (21) is pressed in the gear housing (140) and the two lugs (23) of the outer ring (21) are spaced apart from an inner surface of the gear housing by a gap (25).

5. The electromechanical power steering system as claimed in one of the preceding claims, **characterized in that** the lugs (22) serve as a damping element and damp the movement of the inner ring (19) in the outer ring (21).

6. The electromechanical power steering system as claimed in one of the preceding claims, **characterized in that** the longitudinal axis (26) of the noses (22) is oriented perpendicularly to the axis of rotation of the shaft (140) and perpendicularly to a movement direction (27) of the compensation device.

7. The electromechanical power steering system as claimed in one of the preceding claims, **characterized in that** the noses (22) define a pivot axis about which the shaft (14) can be pivoted in the direction of the helical gearwheel (15).

8. The electromechanical power steering system as claimed in one of the preceding claims, **characterized in that** the floating bearing (18) is pressed into the inner ring (19).

9. The electromechanical power steering system as claimed in one of the preceding claims, **characterized in that** the inner ring (19) and the outer ring (21) of the compensation device are produced from plastic material.

10. An electromechanical power steering system (1) comprising an electric motor (10) with a motor shaft which drives a shaft (14) which meshes with a helical gearwheel (15), wherein the shaft (14) is arranged in a gear housing (141) and, at its first end, is mounted in a bearing arrangement (16) such that it can be rotated about an axis of rotation (140) and, at its second end, is mounted in a floating bearing (18) in the gear housing (141), **characterized in that** the floating bearing (18) has an outer ring which, on two radially opposite sides, has a respective nose (22), which is formed from an elastomer, and **in that** the outer ring of the floating bearing (18) is enclosed circumferentially by a sleeve (21), wherein the sleeve (21) has appropriately formed lugs (23) for accommodating the noses (22) and, in an unloaded state, there is a gap present between the outer ring of the floating bearing (18) and the sleeve (21), outside the region of the noses (22).

11. The electromechanical power steering system as claimed in one of the preceding claims, **characterized in that** the electric motor (10) of the electromechanical power steering system is arranged on a steering column.

12. The electromechanical power steering system as claimed in one of preceding claims 1 to 10, **characterized in that** the electric motor (10) acts on a steering pinion connected to the steering shaft.

13. The electromechanical power steering system as claimed in one of preceding claims 1 to 10, **characterized in that** the electromechanical power steering system has a dual-pinion steering mechanism, wherein the electric motor (10) acts on a steering pinion (5) connected to the steering shaft and/or acts on a second pinion (9), which is spaced apart from the steering pinion (5) and meshes with the rack (6).

14. The electromechanical power steering system as claimed in one of the preceding claims, **characterized in that** the helical gearwheel (15) is a worm gear and the shaft (14) is a worm shaft.

## Revendications

1. Direction assistée électromécanique (1) comprenant un moteur électrique (10) avec un arbre de moteur, qui entraîne un arbre (14) engrenant avec une roue hélicoïdale (15), l'arbre (14) étant agencé dans un carter d'engrenage (141) et étant monté à sa première extrémité dans un agencement de palier (16) de manière à pouvoir tourner autour d'un axe de rotation (140) et étant monté à sa deuxième extrémité dans un palier libre (18) dans le carter d'engrenage (141), **caractérisée en ce que** le palier libre (18) est entouré par un dispositif de compensation (20), qui présente une bague intérieure (19), qui présente sur deux côtés radialement opposés respectivement un ergot (22), qui est formé en un élastomère, et **en ce que** le dispositif de compensation (20) présente une bague extérieure (21) entourant la bague intérieure (19) sur sa périphérie, la bague extérieure (21) présentant des trous (23) de forme correspondante pour recevoir les ergots (22), et un interstice (24) étant présent entre la bague intérieure (19) et la bague extérieure (21) dans un état non sollicité, en dehors de la zone des ergots (22) .

2. Direction assistée électromécanique selon la revendication 1, **caractérisée en ce que** les ergots (22) sont configurés d'une seule pièce avec la bague intérieure (19).

3. Direction assistée électromécanique selon la revendication 1 ou 2, **caractérisée en ce que** les ergots (22) sont fendus dans la direction radiale.

4. Direction assistée électromécanique selon l'une quelconque des revendications précédentes, **caractérisée en ce que** la bague extérieure (21) est enfoncée dans le carter d'engrenage (140) et les deux trous (23) de la bague extérieure (21) sont espacés d'une surface intérieure du carter d'engrenage par un interstice (25) .

5. Direction assistée électromécanique selon l'une quelconque des revendications précédentes, **caractérisée en ce que** les ergots (22) servent d'éléments d'amortissement et amortissent le déplacement de la bague intérieure (19) dans la bague extérieure (21).

6. Direction assistée électromécanique selon l'une quelconque des revendications précédentes, **caractérisée en ce que** l'axe longitudinal (26) des ergots (22) est orienté perpendiculairement à l'axe de rotation de l'arbre (140) et perpendiculairement à une direction de déplacement (27) du dispositif de compensation.

7. Direction assistée électromécanique selon l'une quelconque des revendications précédentes, **caractérisée en ce que** les ergots (22) définissent un axe de pivotement autour duquel l'arbre (14) peut pivoter en direction de la roue hélicoïdale (15).

8. Direction assistée électromécanique selon l'une quelconque des revendications précédentes, **caractérisée en ce que** le palier libre (18) est enfoncé dans la bague intérieure (19).

9. Direction assistée électromécanique selon l'une quelconque des revendications précédentes, **caractérisée en ce que** la bague intérieure (19) et la bague extérieure (21) du dispositif de compensation sont fabriquées en matière plastique.

10. Direction assistée électromécanique (1) comprenant un moteur électrique (10) avec un arbre de moteur, qui entraîne un arbre (14) engrenant une roue hélicoïdale (15), l'arbre (14) étant agencé dans un carter d'engrenage (141) et étant monté à sa première extrémité dans un agencement de palier (16) de manière à pouvoir tourner autour d'un axe de rotation (140) et étant monté à sa deuxième extrémité dans un palier libre (18) dans le carter d'engrenage (141), **caractérisée en ce que** le palier libre (18) présente une bague extérieure, qui présente sur deux côtés radialement opposés un ergot (22), qui est formé en un élastomère, et **en ce que** la bague extérieure du palier libre (18) est entourée sur sa périphérie par une douille (21), la douille (21) présentant des trous (23) de forme correspondante pour recevoir les ergots (22), et un interstice étant présent entre la bague extérieure du palier libre (18) et la douille (21), dans un état non sollicité, en dehors de la zone des ergots (22).

11. Direction assistée électromécanique selon l'une quelconque des revendications précédentes, **caractérisée en ce que** le moteur électrique (10) de la direction assistée électromécanique est agencé sur une colonne de direction.

12. Direction assistée électromécanique selon l'une quelconque des revendications 1 à 10 précédentes, **caractérisée en ce que** le moteur électrique (10) agit sur un pignon de direction relié à l'arbre de direction.

13. Direction assistée électromécanique selon l'une quelconque des revendications 1 à 10 précédentes, **caractérisée en ce que** la direction assistée électromécanique comprend un mécanisme de direction à double pignon, le moteur électrique (10) agissant sur un pignon de direction (5) relié à l'arbre de direction et/ou sur un deuxième pignon (9) espacé du pignon de direction (5) et engrenant avec la crémaillère (6).

14. Direction assistée électromécanique selon l'une quelconque des revendications précédentes, **caractérisée en ce que** la roue hélicoïdale (15) est une roue à vis sans fin et l'arbre (14) est un arbre à vis sans fin.
